# EUROPÄISCHE PATENTANMELDUNG

(11) **EP 1 512 964 A2**
(43) Veröffentlichungstag der Anmeldung: **09.03.2005**
(21) Anmeldenummer: 04020755.7
(22) Anmeldetag: 01.09.2004
(51) Int. Cl.: G01N 22/04

(54) **Verfahren und Vorrichtung zur Bestimmung des Fahrbahnzustandes mit Mikrowellen**

(30) Priorität: 08.09.2003 DE 10341685; 23.10.2003 DE 10349515
(71) Anmelder: DaimlerChrysler AG, 70567 Stuttgart (DE)
(72) Erfinder: Böhm, Konrad, 89134 Blaustein (DE)

(57) **Zusammenfassung**

Die Erfindung betrifft ein Verfahren und eine Vorrichtung zur Bestimmung des Zustandes von Fahrbahnoberflächen, wobei elektromagnetische Strahlung mit einer Frequenz im GHz-Bereich auf mindestens zwei unterschiedlichen Frequenzen gesendet, auf der Fahrbahnoberfläche reflektiert und/oder gestreut und anschließend empfangen wird, wobei dass die Bestimmung des Zustandes der Fahrbahnoberfläche anhand eines Vergleiches der auf den unterschiedlichen Frequenzen empfangenen Strahlungsintensitäten mit einander erfolgt.

## Beschreibung

Die Erfindung betrifft ein Verfahren und eine Vorrichtung zur Erkennung des Fahrbahnzustandes für Fahrzeuge, insbesondere für Kraftfahrzeuge nach dem Oberbegriff der Patentansprüche 1 bzw. 10.

Eine wesentliche, wenn nicht die wesentlichste Voraussetzung zur sicheren Fortbewegung eines Fahrzeuges ist die Gewährleistung der optimalen Haftung der Fahrzeugreifen auf der Fahrbahn.
Plötzlich auftretende Straßenglätte oder Nässe beeinträchtigt diese Haftung erheblich und ist deswegen eine verbreitete Ursache zahlreicher Unfälle mit teilweise schwerwiegenden Folgen. Die besondere Problematik hierbei besteht darin, dass der Fahrzeugführer oftmals das Vorhandensein von Glätte oder Nässe nicht bzw. zu spät erkennt und infolgedessen rasch die Kontrolle über das Fahrzeug verliert.
Um dieser gefährliche Situation zu begegnen, wurden in der Vergangenheit verschiedene Systeme vorgeschlagen, die den Fahrer bei der Einschätzung des Zustandes der Fahrbahnoberfläche unterstützen bzw. automatisiert Maßnahmen zur Unfallvermeidung veranlassen.
So wird beispielsweise in der deutschen Patentanmeldung DE 19718623 A1 ein System vorgestellt, bei dem der Zustand der Fahrbahnoberfläche mittels Radarstrahlung bestimmt wird. Die Problematik dieses Lösungsansatzes besteht jedoch darin, dass das vorgestellte Verfahren keine eindeutigen Ergebnisse liefert und eine zuverlässige Bestimmung des Fahrbahnzustandes nicht gewährleistet ist.
Ein weiterer Lösungsansatz zu der oben genannten Problematik besteht darin, anhand der Verformung des Reifenprofiles beim Abrollen eines Reifens auf der Fahrbahn Rückschlüsse auf den Zustand der Fahrbahnoberfläche, insbesondere auf den Reibwert zwischen Reifen und Fahrbahnoberfläche zu ziehen. Hierzu ist es jedoch erforderlich, eine bestimmte Anzahl von Sensoren in den Reifen einzubringen, was aufgrund des spezifischen Einbauortes (Verschleißteile, hohe Beschleunigungswerte, problematische Kontaktierung zur Signalübertragung) erhebliche Probleme bei der Realisation aufwirft.
In der deutschen Patentanmeldung DE 29 12 645 A1 wird eine Vorrichtung zum Warnen vor Straßenglätte vorgeschlagen, bei der der Zustand der Fahrbahnoberfläche anhand reflektierter elektromagnetischer Wellen unterschiedlicher Frequenzen bestimmt wird. Die in der genannten Schrift offenbarte Vorrichtung zeigt jedoch erhebliche Nachteile. Beispielsweise besteht eine erhöhte Anfälligkeit der beschriebenen Vorrichtung gegenüber sich ändernden Ausbreitungsbedingungen der verwendeten elektromagnetischen Signale. Die Änderungen der Ausbreitungsbedingungen können dabei auf geometrische Änderungen wie beispielsweise kurzfristige Änderungen des Abstandes der Sensoren zur Fahrbahnoberfläche zurückgehen.

Es ist die Aufgabe der vorliegenden Erfindung, eine Vorrichtung und ein Verfahren anzugeben, das eine zuverlässige, robuste und kostengünstige Bestimmung des Zustandes einer Fahrbahnoberfläche gewährleistet.

Diese Aufgabe wird von dem Verfahren mit den im Anspruch 1 angegebenen Merkmalen sowie von der Vorrichtung mit den im Anspruch 10 angegebenen Merkmalen gelöst. Die in den Unteransprüchen angegebenen Merkmale beziehen sich auf vorteilhafte Weiterbildungen und Ausgestaltungen der Erfindung.

Bei dem erfindungsgemäßen Verfahren zur Bestimmung des Zustandes einer Fahrbahnoberfläche wird elektromagnetische Strahlung auf unterschiedlichen Frequenzen aus dem GHz-Bereich verwendet. Diese Strahlung wird in Richtung der Fahrbahnoberfläche von einer vorzugsweise an der Unterseite eines Fahrzeuges angebrachten Sendeeinheit ausgesendet und nach der Reflexion oder Streuung an der Fahrbahnoberfläche von einer Empfangseinheit aufgenommen. Anschließend werden die Intensitäten der von der Empfangseinheit aufgenommenen elektromagnetischen Strahlung der unterschiedliche Frequenzen anhand der empfangenen Signalstärke bestimmt und in einer Auswerteeinheit miteinander verglichen.
Dabei kann die elektromagnetische Strahlung auf den unterschiedlichen Frequenzen sowohl gleichzeitig als auch sequenziell ausgesendet und aufgenommen werden.
Der Vergleich der Intensitäten der aufgenommenen Strahlung hat den Vorteil, dass damit störende Effekte und somit Fehlinterpretationen des Messergebnisses weitgehend unterdrückt werden können. Eine ausschließliche Betrachtung der beispielsweise auf einer Frequenz empfangenen Signalstärke wäre ausgesprochen anfällig gegenüber Störungen, die auf dem Weg des Signals von der Sendeeinheit zur Fahrbahnoberfläche und zurück zur Empfangseinheit auftreten.
Beispielsweise würde eine plötzlich auftretende Verschmutzung einer Sende- beziehungsweise einer Empfangsantenne den Pegel des Empfangssignals schlagartig reduzieren, was zu einer fehlerhaften Bestimmung des Zustandes der Fahrbahnoberfläche führen würde. Im Unterschied hierzu wird dieser Effekt durch das erfindungsgemäße Verfahren wirksam vermieden, da sich eine derartige Verschmutzung auf den Signalpegel aller empfangenen Signale auswirkt und der Effekt durch den Vergleich der empfangenen Intensitäten unterdrückt wird.

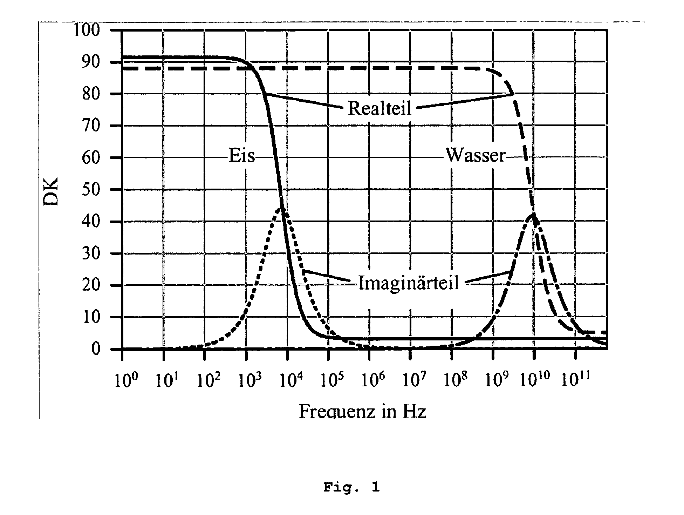

Es hat sich hierbei besonders bewährt, aus dem Resultat des Vergleichs der empfangenen Intensitäten auf das Vorhandensein von Wasser auf der Fahrbahnoberfläche zu schließen.
Das erfindungsgemäße Verfahren eignet sich deswegen in besonderem Maße zur Detektion von Wasser auf der Fahrbahnoberfläche, weil Wasser gerade im GHz-Bereich besondere dielektrische Eigenschaften zeigt. Wassermoleküle haben ein permanentes elektrisches Dipolmoment und können daher durch elektrische Wechselfelder zu Drehungen angeregt werden. Dieser Effekt ist als Orientierungspolarisation bekannt. Diese Eigenschaften des Wassers resultieren darin, dass die komplexe Dielektrizitätskonstante des Wassers bei niedrigen Frequenzen bis ca. 100 MHz einen großen Realteil und einen kleinen Imaginärteil aufweist. Oberhalb des Bereiches der Relaxationsfrequenz, die bei ca. 10 GHz liegt, können die Moleküle dem anregenden Feld nicht mehr folgen; der den Brechungsindex bestimmende Realteil der Dielektrizitätskonstanten sinkt in diesem Bereich sehr stark ab, während der in bekannter Weise mit dem Absorptionskoeffizienten verknüpfte Imaginärteil hier ein Maximum aufweist. Der genaue Verlauf der komplexen Dielektrizitätskonstanten von Wasser und Eis ist aus der Fig. 1 ersichtlich.
Aufgrund der starken Änderung des Brechungsindizes des Wassers in dem beschriebenen Frequenzbereich ändert sich das Reflexionsvermögen einer Wasseroberfläche im betrachteten Frequenzbereich drastisch. Somit steht es bei der Wahl von elektromagnetischer Strahlung aus dem genannten Frequenzbereich zu erwarten, dass sich die an der Wasseroberfläche reflektierten Intensitäten deutlich unterscheiden, während bei Abwesenheit von Wasser kein wesentlicher Unterschied der beispielsweise an einer Asphaltoberfläche reflektierten Intensitäten zu erwarten ist.
Somit gestattet es das erfindungsgemäße Verfahren, anhand der besonderen dielektrischen Eigenschaften von Wasser zuverlässig zu bestimmen, ob eine Fahrbahnoberfläche nass oder trocken ist. Da diese Bestimmung vorwiegend anhand der Reflexionseigenschaften der zu untersuchenden Oberfläche und damit anhand der Eigenschaften einer Grenzfläche vorgenommen wird, ist die Dicke des Wasserfilms auf der Fahrbahnoberfläche für die Bestimmung des Fahrbahnzustandes weitgehend unerheblich; die Unterscheidung zwischen einer nassen und einer trockenen Fahrbahnoberfläche kann damit zuverlässig getroffen werden.

In einer besonders vorteilhaften Ausgestaltung der Erfindung werden die empfangenen Intensitäten aus den Frequenzbereichen von ca.2,4 GHz und ca.5,8 GHz verglichen. Der besondere Vorteil dieser Wahl liegt darin, dass sich der Realteil der Dielektrizitätskonstante von Wasser in diesem Frequenzbereich besonders stark ändert und somit der Vergleich der empfangenen Intensitäten ein eindeutiges Ergebnis liefert. Darüber hinaus sind die beiden Frequenzbänder bei 2,4 GHz und 5,8 GHz sogenannte ISM(**I**ndustrial, **S**cientific and **M**edical)-Bänder und damit zulassungsfrei, so dass elektromagnetische Aussendungen in diesen Frequenzbereichen keinen gesetzlichen Beschränkungen unterliegen und damit einer Realisation des erfindungsgemäßen Verfahrens keine formellen Hindernisse entgegenstehen. Somit erlaubt es diese spezielle Wahl der Frequenzbereiche, ein effizientes Verfahren zur Bestimmung des Zustandes einer Fahrbahnoberfläche ohne aufwändige Genehmigungsverfahren zur Anwendung zu bringen.

In einer bevorzugten Ausprägung des erfindungsgemäßen Verfahrens handelt es sich bei der gesendeten elektromagnetischen Strahlung um schmalbandige Signale auf mindestens zwei unterschiedlichen Frequenzen. Durch die Verwendung der schmalbandigen Signale wird es möglich, in den interessierenden Frequenzbereichen mit einer hohen spektralen Leistungsdichte zu operieren und somit den Empfang der von der Fahrbahnoberfläche reflektierten oder gestreuten Signale wesentlich zu erleichtern. Insbesondere bei der Wahl der obengenannten Frequenzbänder für die Mittenfrequenz der verwendeten Signale wird somit auch eine mögliche Störung in anderen Frequenzbereichen verringert.

Umgekehrt ist es ebenso denkbar, dass es sich bei der gesendeten elektromagnetischen Strahlung um ein extrem breitbandiges Signal, insbesondere um ein UWB(**U**ltra **W**ide **B**and)-**S**ignal, handelt. UWB-Signale zeichnen sich durch ihre extrem hohe Bandbreite bei gleichzeitig ausgesprochen geringer spektraler Leistungsdichte aus. In der Praxis würden zur Aussendung eines UWB-Signals kurze, steilflankige Pulse verwendet. Eine Fouriertransformation des empfangenen Signals liefert das komplette Spektrum, anhand dessen durch den oben geschilderten Vergleich der Intensitäten der empfangenen Strahlung in den interessierenden Spektralbereichen die Bestimmung des Zustandes der Fahrbahnoberfläche erfolgen kann.
Der besondere Vorteil dieser Variante der Erfindung liegt darin, dass aufgrund der geringen spektralen Leistungsdichte der UWB-Signale Störungen Dritter minimiert werden und sich darüber hinaus durch die extreme Breite des ausgewerteten Frequenzbereiches weitere Möglichkeiten zu einer spektroskopischen Untersuchung der empfangenen Signale eröffnen.

In einer besonders vorteilhaften Ausgestaltung der Erfindung erfolgt der Vergleich der Intensitäten durch eine Quotientenbildung der auf zwei unterschiedlichen Frequenzen empfangenen Strahlungsintensitäten. Bei der Abwesenheit von Wasser steht zu erwarten, dass sich die in den unterschiedlichen Frequenzbereichen reflektierten und/oder gestreuten Signale hinsichtlich ihrer Intensitäten nicht wesentlich von einander unterscheiden. Demzufolge ist für diesen Fall als Ergebnis der Quotientenbildung ein bestimmter Wert R1 zu erwarten. Tritt Wasser auf der Fahrbahnoberfläche auf, wird die ausgesendete elektromagnetische Strahlung in Abhängigkeit von ihrer Frequenz unterschiedlich stark reflektiert. Damit ergibt sich aus der Quotientenbildung ein deutlich von dem obigen Wert verschiedener Wert R2, der in einfacher Weise zu der Unterscheidung einer trockenen von einer nassen Fahrbahnoberfläche herangezogen werden kann.

Durch eine Quadratur-Signalverarbeitung lässt sich eine getrennte Bestimmung von Real- und Imaginärteil des reflektierten und/oder gestreuten Signals durchführen.
Durch die Auswertung von Real- und Imaginärteilen bei zwei verschiedenen Frequenzen lassen sich so vier unterschiedliche Werte für die Quotienten bestimmen.
Durch diese Maßnahme wird die Zuverlässigkeit und Eindeutigkeit der Bestimmung des Fahrbahnzustandes wesentlich erhöht.

Die Resultate des erfindungsgemäßen Verfahrens lassen sich darüber hinaus dadurch weiter verbessern, dass die verwendete Strahlung senkrecht zur Einfallsebene polarisiert ist. Dabei ist die Einfallsebene durch den einfallenden und den reflektierten Strahl definiert und somit senkrecht zu der Grenzfläche. Senkrecht zur Einfallsebene polarisierte Strahlung zeigt die Charakteristik, dass sie beim Übergang vom optisch dünneren in das optisch dichtere Medium in höherem Maße an einer Grenzfläche reflektiert wird als beispielsweise parallel polarisierte oder unpolarisierte elektromagnetische Strahlung. Diese Tatsache läßt sich zwanglos aus den sogenannten Fresnel'schen Formeln, die den Zusammenhang insbesondere von Polarisation, Einfallswinkel und reflektierter Intensität an einer Grenzfläche angeben, ableiten. Unter Ausnutzung dieses Sachverhaltes wird es so möglich, die Intensität der an der Fahrbahnoberfläche reflektierten Strahlung lediglich durch die Wahl der Polarisation zu erhöhen und damit die Zuverlässigkeit und Genauigkeit des erfindungsgemäßen Verfahrens weiter zu erhöhen.

Das erfindungsgemäße Verfahren kann ferner dazu eingesetzt werden, bei der Detektion von Wasser auf der Fahrbahnoberfläche Steuerparameter für ein oder mehrere Fahrerassistenzsysteme entsprechend anzupassen. Die Wirksamkeit von Fahrerassistenzsystemen wie beispielsweise des elektronischen Stabilitätsprogrammes ESP hängt in entscheidendem Maße davon ab, in welchem Umfang Informationen über die Beschaffenheit der Fahrbahn vorliegen. Es ist zwar möglich, diese Informationen aus der Fahrdynamik selbst zu gewinnen, jedoch ist diese Vorgehensweise mit dem Nachteil behaftet, dass die so erhaltenen Informationen über den Zustand der Fahrbahnoberfläche erst dann vorliegen, wenn sich dies bereits auf die Fahrdynamik auswirkt, also beispielsweise Aquaplaning oder Schleudern registriert wird. Hier können die Ergebnisse des erfindungsgemäßen Verfahrens in vorteilhafter Weise dazu verwendet werden, bereits vor dem Auftreten von kritischen Fahrsituationen die Steuerparameter für Fahrerassistenzsysteme zu optimieren, damit einen wichtigen Zeitvorteil zu realisieren und im Ergebnis die Fahrsicherheit zu erhöhen.

Eine beispielhafte Vorrichtung zur Realisation des beschriebenen Verfahrens zeigt eine Sendeeinheit und eine Empfangseinheit zur Aussendung bzw. zum Empfang von elektromagnetischer Strahlung auf mindestens zwei unterschiedlichen Frequenzen im GHz-Bereich sowie eine Steuereinheit und eine Auswerteeinheit. Dabei ist die Auswerteeinheit geeignet, den Zustand der Fahrbahnoberfläche durch einen Vergleich der Intensitäten der empfangenen elektromagnetischen Strahlung zu bestimmen. Dabei zeigt die Sendeeinheit beispielsweise einen Signalgenerator und eine damit verbundene Sendeantenne, über die elektromagnetische Strahlung des gewünschten Frequenzbereiches und der gewünschten Intensität ausgesendet werden kann. Die Polarisation der ausgesandten Strahlung wird dabei im wesentlichen durch die räumliche Ausrichtung der Sendeantenne bestimmt. Als Sendeantennen können Dipolantennen, dielektrische Antennen, Leckwellenleitern, offene Wellenleiter (geschlitzte Koaxialleitungen, Harms Goubau Leitung ,etc.) und ähnliche Anordnungen verwendet werden. Nach der Reflexion an der Fahrbahnoberfläche wird ein Teil der elektromagnetischen Strahlung mittels einer Empfangsantenne aufgenommen und einer Auswerteeinheit zugeführt. Dabei kann bei geeigneter Ansteuerung beispielsweise in einem Pulsbetrieb auch die Sendeantenne als Empfangsantenne verwendet werden.
Nach dem Empfang des Signals nimmt die Auswerteeinheit eine Analyse z.B. durch Quotientenbildung aus den Intensitäten der in verschiedenen Frequenzbereichen empfangenen Signale vor und liefert als Ergebnis eine Aussage über das Vorhandensein von Wasser auf der Fahrbahnoberfläche.

Mit der beschriebenen Vorrichtung und dem oben dargestellten Verfahren ist es somit mit geringem apparativen Aufwand möglich, ein kompaktes, robustes und zuverlässiges System zur Fahrbahnzustandserkennung und damit zur Erhöhung der Sicherheit im Straßenverkehr zu realisieren.

## Patentansprüche

1. Verfahren zur Bestimmung des Zustandes von Fahrbahnoberflächen, wobei elektromagnetische Strahlung mit einer Frequenz im GHz-Bereich auf mindestens zwei unterschiedlichen Frequenzen gesendet, auf der Fahrbahnoberfläche reflektiert und/oder gestreut und anschließend empfangen wird,
**dadurch gekennzeichnet,**
**dass** die Bestimmung des Zustandes der Fahrbahnoberfläche anhand eines Vergleiches der auf den unterschiedlichen Frequenzen empfangenen Strahlungsintensitäten mit einander erfolgt.

2. Verfahren zur Bestimmung des Zustandes von Fahrbahnoberflächen nach Anspruch 1,
**dadurch gekennzeichnet,**
**dass** aus dem Resultat des Vergleichs auf das Vorhandensein von Wasser auf der Fahrbahnoberfläche geschlossen wird.

3. Verfahren zur Bestimmung des Zustandes von Fahrbahnoberflächen nach einem der vorangehenden Ansprüche,
**dadurch gekennzeichnet,**
**dass** die empfangenen Strahlungsintensitäten aus den Frequenzbereichen von ca. 2,4 GHz und ca. 5,8 GHz verglichen werden.

4. Verfahren zur Bestimmung des Zustandes von Fahrbahnoberflächen nach einem der vorangehenden Ansprüche,
**dadurch gekennzeichnet,**
**dass** es sich bei der gesendeten elektromagnetischen Strahlung um schmalbandige Signale auf mindestens zwei unterschiedlichen Frequenzen handelt.

5. Verfahren zur Bestimmung des Zustandes von Fahrbahnoberflächen nach einem der vorangehenden Ansprüche,
**dadurch gekennzeichnet,**
**dass** es sich bei der gesendeten elektromagnetischen Strahlung um ein breitbandiges Signal, insbesondere um ein UWB-Signal, handelt.

6. Verfahren zur Bestimmung des Zustandes von Fahrbahnoberflächen nach einem der vorangehenden Ansprüche,
**dadurch gekennzeichnet,**
**dass** der Vergleich durch eine Quotientenbildung aus den auf zwei unterschiedlichen Frequenzen empfangenen Strahlungsintensitäten erfolgt.

7. Verfahren zur Bestimmung des Zustandes von Fahrbahnoberflächen nach Anspruch 6,
**dadurch gekennzeichnet,**
**dass** zusätzlich eine Bestimmung von Real- und Imaginärteil des reflektierten und/oder gestreuten Signals erfolgt.

8. Verfahren zur Bestimmung des Zustandes von Fahrbahnoberflächen nach einem der vorangehenden Ansprüche,
**dadurch gekennzeichnet,**
**dass** die verwendete Strahlung senkrecht zur Einfallsebene polarisiert ist.

9. Verfahren zur Bestimmung des Zustandes von Fahrbahnoberflächen nach einem der vorangehenden Ansprüche,
**dadurch gekennzeichnet,**
**dass** bei Detektion von Wasser auf der Fahrbahnoberfläche Steuerparameter für ein oder mehrere Fahrerassistenzsysteme angepasst werden.

10. Vorrichtung zur Bestimmung des Zustandes von Fahrbahnoberflächen, mit einer Sendeeinheit und einer Empfangseinheit zur Aussendung bzw. zum Empfang von elektromagnetischer Strahlung auf mindestens zwei unterschiedlichen Frequenzen im GHz-Bereich sowie einer Steuereinheit und einer Auswerteeinheit,
**dadurch gekennzeichnet,**
**dass** die Auswerteeinheit geeignet ist, den Zustand der Fahrbahnoberfläche durch einen Vergleich der empfangenen Intensitäten mit einander zu bestimmen.
